Europäisches Patentamt

European Patent Office

Office européen des brevets

(11) Publication number: **0 207 024 B1**

## EUROPEAN PATENT SPECIFICATION

(45) Date of publication of patent specification: **04.03.92**    (51) Int. Cl.⁵: **C09J 5/04**, C09J 161/00

(21) Application number: **86850193.3**

(22) Date of filing: **02.06.86**

(54) **A method for gluing using curable adhesives with separate application of the adhesive components and a resin component for use in the method.**

(30) Priority: **17.06.85 SE 8502993**

(43) Date of publication of application:
**30.12.86 Bulletin 86/52**

(45) Publication of the grant of the patent:
**04.03.92 Bulletin 92/10**

(84) Designated Contracting States:
**AT BE DE FR NL SE**

(56) References cited:
**DE-A- 2 504 326**
**GB-A- 599 683**
**US-A- 2 557 826**

**CHEMICAL ABSTRACTS, vol. 101, no. 20, 12th November 1984, page 56, abstract no. 172553c, Columbus, Ohio, US; F.A. CAMERON et al.: "Fast-setting 'honeymoon' adhesive system for glulam beams in vertical and horizontal clamping systems", & REPORT 1983, CSIR/SR/HOUT-291; Order No. PB84-185347, 24pp.**

**CHEMICAL ABSTRACTS, vol. 84, no. 20, 17th May 1976, page 62, abstract no. 136842t, Columbus, Ohio, US; & SE-A-370 546**

**(AKTIEBOLAG CASCO) 21-10-1974**

(73) Proprietor: **Casco Nobel AB**
**Box 11010**
**S-100 61 Stockholm(SE)**

(72) Inventor: **Andersson, Sven-Erik**
**Ormingeringen 29B**
**S-132 00 Saltsjö-Boo(SE)**

(74) Representative: **Schöld, Zaid**
**Nobel Industries Sweden AB Patent Department Box 11554**
**S-100 61 Stockholm(SE)**

EP 0 207 024 B1

**Description**

The present invention relates to a method for bonding surfaces, preferably wood surfaces - and then particularly at the production of laminated wood, using curable adhesives, whereby a resin component and a hardener component are separately applied to the joint area.

Separate application of resin and hardener means that these components will not be mixed or brought into contact with each other before they reach the joint area. This means that no mixing operation is required before the application, that the risk of pre-curing of an adhesive mix at storage, transport and in application equipment is eliminated and consequently that operation interruptions due to these factors can be avoided. Separate application also means that the pot-life or working life of the components in theory is unlimited and hereby requirements on cleaning of equipment after use are eliminated and the necessity to discard adhesive which has not been used is also eliminated.

These advantages have been known for a long time and been made use of in several known bonding methods, particularly in highly industrialized gluing processes, such as lamination processes, see German patent No. 2416032-1 . However, despite these advantages the separate application technique also poses several problems, particularly at the gluing of wood material.

The mixing of the components is thus a special problem in connection with separate application as the mixing must occur on the treated surface and only by the aid of the assembling of the parts, optional application of pressure and the diffusion of the components in the adhesive layer. An uneven distribution of the adhesive components at the bonding of wood can cause unreacted liquid component from adhesive which has not been cured to be dissolved and flow out from the glue joint when it rains and this will lead to dark stains on the wood surface, so-called bleeding from the joint. This will of course result in a considerable impairment in the appearance of the wood construction. Knot holes, damages from planing and other defects in the lamellae are other places where adhesive and hardener are not completely mixed, which can result in such bleedings.

The object of the present invention is to solve the problems of bleeding from glue joints, glued for example with the in the production of laminated wood conventionally used formaldehyde based adhesives, preferably resorcinol-formaldehyde adhesives or resorcinol-phenolformaldehyde adhesives, by using an adhesive wherein the resin component has a limited water dilutability.

The water dilutability or water tolerance was measured in the following way: 10 g resin was tempered to $20°C$ and titrated with distilled water of $20°C$ until the resin was precipitated.

The water dilutability for the mentioned resin components can be lowered by lowering the pH of the resin to below 7.5 and suitably to a pH of 7. However, the resin will hereby get a low reactivity and this is less desirable in certain fields of use.

Improved results are achieved if the resin condensation, by means of a suitable selection of catalyst and other reaction conditions, is carried out in such a manner that a high content of methylene bridges and few free methylol groups are obtained. This resin has a low water dilutability, a high pH value and also high reactivity.

The present invention thus relates to a method for gluing with curable adhesives whereby a resin component and a hardener component are separately applied to the joint area, which method is characteristic in that the resin component has a limited water dilutability and has a water dilutability of less that 3.0 parts by weight of water per 1 part by weight of resin, and suitably of from 0.1 to 2.0 parts of water per part of resin.

According to a preferred embodiment of the invention resin components having a water dilutability of from 0.5 to 1.5 parts of water per part of resin are used. If the resin component has a water dilutability of less than 0.1 there can be difficulties in the cleaning of containers and applicators for the resin component. For the in the technique conventionally used adhesives the water dilutability of the resin component is usually greater than 6.0 parts of water per part of resin.

In the following examples, Example 1 to 3 relate to the preparation of two adhesive components suitable for use in the process of the invention and to a resin component according to prior art as a comparison.

Example 4 and 5 are delamination tests for two series of laminated wood products, one that has been glued with an adhesive containing resin components of low water dilutability according to the invention and one that has been bonded according to conventional technique. These tests show that the bond strength of products glued according to the invention is not changed in comparison with products produced according to conventional technique.

Example 6 shows bleeding tests with three different laminated wood products, two which have been glued according to the invention and one which has been glued in the conventional manner. Superior results were obtained with the method of the invention as evident from the results shown in the table.

2

In all examples pH and viscosity have been measured at 25°C. An electric pH-meter was used for pH measurements. The viscosity was measured with a Höppler viscosimeter. The condensations were carried out in a 1500 ml glass flask equipped with a heating jacket, a reflux cooler, a thermometer and an opening for taking samples.

Example 1

Preparation of a resin component with low water dilutability.

250 g of phenol, 110 g of formalin (40%), 3.2 g of sodium hydroxide (45%) and 44 g of water were charged to a glass flask. The pH was measured to 8.2 and the batch was then heated to boiling. The condensation was followed at the boiling temperature by measuring the temperature at which resin was precipitated at cooling of a resin sample. The boiling was continued until a resin sample precipitated at cooling to +75°C, and the resin was then cooled to 80°C. 223 g of resorcinol were charged and the temperature kept at 68°C for 15 minutes. 30 g of ethanol, 100 g of water, 90 g of formalin and 37 g of filler were then added. The batch was then kept at 60°C for 45 minutes, whereafter 15 g of sodium hydroxide (45%) were added. The pH was measured to 7.7. The batch was then heated to boiling and at boiling under reflux condensed to a viscosity of 1000 mPas. The batch was then rapidly cooled. At 40°C 25 g of diethyleneglycol and 22 g of sodium hydroxide (45%) were added. After cooling to 25°C the resin was made thixotropic by admixing of 7.5 g of Aerosil 200® by means of a dissolver agitator.

Analysis of the resin 24 hours after production gave the following results:
pH = 8.1
dry substance content = 59%
water dilutability = 1 + 0.6 (= 1 part of resin is precipitated by 0.6 parts of water)

```
gelling time at 50°C = resin 100 g        ⎫  6 minutes 14 se-
                       37% formalin 26 g  ⎭  conds
```

Example 2

Preparation of a resin component with low water dilutability.

317 g of phenol, 148 g of formalin (40%), 4.1 g of sodium hydroxide (45%) and 50 g of water were charged to a glass flask. pH was measured to 8.2 and the batch was then heated to boiling. Condensation was carried out in accordance with Example 1 until resin precipitation occurred upon cooling a resin sample to 60°C. The batch was then cooled to 80°C, 250 g of resorcinol were added and the temperature kept at 68°C for 15 minutes. 50 g of ethanol, 115 g of water, 100 g of formalin (40%) and 40 g of extender were then added. The batch was kept at 60°C for 45 minutes and then 24 g of sodium hydroxide (45%) were charged. pH was measured to 7.7 and the batch was then heated to boiling. The batch was condensed at boiling temperature to a viscosity of 750 mPas and was then rapidly cooled. At 40°C 20 g of diethylene glycol and 18 g of sodium hydroxide (45%) were charged.

After cooling to 25°C the resin was made thixotropic by admixing 10.5 g of Aerosil 200 by means of a dissolver agitator.

Analysis of the resin 24 hours after production gave the following results:
pH = 7.7
dry substance content = 59%
water dilutability = 1.4 (= 1 part of resin is precipitated by 1.4 parts of water)

```
gelling time at 50°C = resin 100 g        ⎫  7 minutes 57 se-
                       37% formalin 25 g  ⎭  conds
```

Example 3

3

Preparation of a conventional resin component.

317 g of phenol, 145 g of formalin (40%), 4.1 g of sodium hydroxide (45%) and 50 g of water were charged to a glass flask. pH was measured to 8.1 and the batch was then heated to boiling. The condensation was followed at the boiling temperature as in Examples 1 and 2 until resin precipitated at +5°C, and the batch was then cooled to 80°C. 300 g of resorcinol were added and the temperature kept at 68°C for 15 minutes, whereafter 60 g of ethanol, 105 g of water, 40 g of extender and 130 g of formalin (40%) were added. The batch was then kept at 60°C for 90 minutes and 38 g of sodium hydroxide (45%) were then added. pH was measured to 8.1 and the batch was then carefully heated to boiling. The condensation was followed by measuring the viscosity. At a viscosity of 770 mPas the batch was rapidly cooled. At 40°C 30 g of diethylene glycol and 10 g of sodium hydroxide were added. After cooling to 25°C the resin was made thixotropic by admixing 12 g of Aerosil 200 by means of a dissolver agitator.

Analysis of the resin 24 hours after production gave the following results:

pH = 8.2

dry substance content = 60%

water dilutability = 1 + 8 (= 1 part of resin is precipitated by 8 parts of water)

```
gelling time at 50°C = resin 100 g        ⎤  4 minutes 20 se-
                       37% formalin 25 g  ⎦  conds
```

Example 4

Bonding and delamination.

A hardener slurry was first prepared by thoroughly mixing 100 parts by weight of an aceton-formaldehyde resin with 57 parts by weight of paraformaldehyde.

The resin from Example 3 was emptied into one part of a separate ribbon applicator and the above hardener slurry into the other part.

The number of revolutions of the pumps of the applicator was adjusted to give a dosage of 100 parts by weight of resin through the nozzle per minute and at the same time a dosage of 26 g of hardener slurry per minute. The speed of the line carrying the lamellae was adjusted to give a dosage of 400 g/m² of resin and hardener slurry. The resin and the hardener was spread in separate strands which did not get into contact with each other before the assemblying of the lamellae.

Beams of laminated wood were then produced under the following conditions

Adhesive spread = 400 g/m²

Wood = fir 125 x 45 mm

Moisture content of the wood = 10-14%

Closed assembly times from adhesive spread to pressing = 5-45 minutes

Number of lamellae in the construction = 6

Press temperature = 40°C for surrounding air

Pressure = about 7.5 bar

Press time = 18 hours

10 such beams were produced and tested. After one week in a conditioning room, 20°C, 65% RH, the test specimens were investigated according to the standard ASTM D 1101-59/1979. This standard means that the test specimens are first subjected to vacuum 0.5 atm (50 kPa) for 15 minutes, then to 2 hours at 10 atm (1MPa) in cold water, and the procedure is then repeated. The specimens are then dried for 91.5 hours at 29°C with an air speed of 2,5 + 0.25 m/sec and the whole cycle is repeated once more. The evaluation is carried out by measuring and calculating the delamination in the form of adhesive bond rupture and this means that the percentage of the adhesive bond which is ruptured is measured. According to the standard the delamination must be less than 5% of the entire joint length for acceptance.

In the table below the delamination results after 2 cycles are shown. Each value is an average value from five glue joints.

| Table I | % delamination |
|---|---|
| Beam 1 | 0.4 |
| " 2 | 3.0 |
| " 3 | 1.8 |
| 4 | 1.4 |
| " 5 | 1.2 |
| " 6 | 0.9 |
| " 7 | 0.0 |
| " 8 | 0.6 |
| " 9 | 1.7 |
| " 10 | 0.8 |

## Example 5

### Bonding and delamination.

In exactly the same manner as in Example 4 10 beams were made using the adhesive described in Example 1. After two delamination cycles the following results were obtained. Each value is an average value from five glue joints.

| Table II | % delamination |
|---|---|
| Beam 1 | 1.9 |
| " 2 | 0.0 |
| " 3 | 2.0 |
| " 4 | 3.8 |
| " 5 | 3.9 |
| " 6 | 1.7 |
| " 7 | 2.9 |
| " 8 | 0.0 |
| " 9 | 0.4 |
| " 10 | 0.0 |

As evident from tables I and II the corresponding bonding results were obtained with the resin having limited water dilutability according to the invention as with a conventional adhesive.

## Example 6

### Bleeding test

To determine the degree of bleeding of the resins blocks with three joints were made in the following manner.

The blocks were made with a length of 50 cm. At both outer ends, 3 cm at each end and 3 cm at the centre of the block, adhesive was spread with normal dosage of hardener. On one half of the unglued block resin from Example 3 was spread and on the other half resin from Example 1 was spread, in both cases

EP 0 207 024 B1

without hardener. The block was then pressed for 20 hours at room temperature and subsequently conditioned at 20°C, 65% RH, for three days and nights.

In exactly the same manner another block was made using resin from Example 1 and resin from Example 2.

Between the cured outer and middle sections of the blocks the adhesive was thus dried but not cured.

After conditioning of the blocks these were put on end and sprayed with water every half hour for eight hours. The blocks were thus strongly sprayed 16 times.

When the blocks were inspected the following day the results shown below were noted:

Block 1: Adhesive from Example 3 showed a very severe bleeding from the glue joints.
Adhesive from Example 1 showed practically no bleeding.

Block 2: Adhesive from Example 1 showed practically no bleeding.
The joints with adhesive from Example 2 had bled to an insignificant extent, and not as severely as those with adhesive from Example 3.

The results are summarized in the table below.

Example

| | Water dilutability Parts of water for precipitation of 1 part of resin | Noted bleeding |
|---|---|---|
| 1 | 0.6 | No bleeding |
| 2 | 1.4 | Insignificant bleeding |
| 3 | 8 | Very severe bleeding |

As evident from the table above the method of the invention results in a considerably improved resistance to bleeding when bonded wood products are subjected to rain or moisture.

## Claims

1. A method for bonding using such curable water-based, formaldehyde based adhesives in which unreacted dissolved resin component forms dark stains on wood surfaces and whereby resin component and hardner component are separately applied to the joint area, **characterised** in that the resin component has a limited water dilutability and a water dilutability which is below 3.0 parts by weight of water per part by weight of resin.

2. A method according to claim 1, **characterised** in that the resin component has a water dilutability of from 0.1 to 2.0 parts by weight of water per part by weight of resin.

3. A method according to claim 1 or 2, **characterised** in that the resin component has a water dilutability of from 0.5 to 1.5 parts by weight of water per part by weight of resin.

4. A method according to any of the preceding claims, **characterised** in that the resin component is a resorcinol resin or a resorcinol-phenol resin.

5. A method according to any of the preceding claims, **characterised** in that the resin component and the hardener component are applied to the joint area in the form of separate parallell strands.

6. A resin component, consisting of a resorcinol resin or a resorcinol-phenol resin, suitable for bonding according to the method of claim 1, **characterised** in that it has a limited water dilutability and a water dilutability which is below 3.0 parts by weight of water per part by weight of resin.

7. A resin component according to claim 6, **characterised** in that it has a water dilutability of from 0.1 to 2.0 parts by weight of water per part by weight of resin.

## Revendications

6

1. Procédé d'adhésion utilisant des adhésifs durcissables à base d'eau, à base de formaldehyde dans lesquels le composant résine dissout n'ayant pas réagi forme des taches sombres sur des surfaces de bois et selon lequel le composant résine et le composant durcisseur sont appliqués séparément à la zone de liaison, caractérisé en ce que le composant résine possède une aptitude limitée à la dilution par l'eau et une aptitude à la dilution par l'eau qui est inférieure à 3,0 parties en poids d'eau par partie en poids de résine.

2. Procédé selon la revendication 1, caractérisé en ce que le composant résine présente une aptitude à la dilution par l'eau de 0,1 à 2,0 parties en poids d'eau par partie en poids de résine.

3. Procédé selon la revendication 1 ou 2, caractérisé en ce que le composant résine possède une aptitude à la dilution par l'eau de 0,5 à 1,5 parties en poids d'eau par partie en poids de résine.

4. Procédé selon l'une quelconque des revendications précédentes, caractérisé en ce que le composant résine est une résine resorcinol ou une résine resorcinol-phenol.

5. Procédé selon l'une quelconque des revendications précédentes, caractérisé en ce que le composant résine et le composant durcisseur sont appliqués à la zone de liaison sous la forme des cordons parallèles allongés.

6. Composant résine, constitué d'une résine resorcinol ou d'une résine resorcinol-phenol, approprié à la réalisation d'adhésion selon le procédé de la revendication 1, caractérisé en ce qu'il présente une aptitude limitée à la dilution par l'eau et une aptitude à la dilution par l'eau qui est inférieure à 3,0 parties en poids d'eau par partie en poids de résine.

7. Composant résine selon la revendication 6, caractérisé en ce qu'il présente une aptitude à la dilution par l'eau comprise entre 0,1 et 2,0 parties en poids d'eau par partie en poids de résine.

**Patentansprüche**

1. Verklebungsverfahren unter Verwendung von härtbbaren, auf Wasser basierenden Klebstoffen auf Formaldehyd-Grundlage, bei denen die nicht-umgesetzte gelöste Harzkomponente dunkle Flecken auf Holzoberflächen bildet, wobei die Harzkomponente und die Härterkomponente getrennt auf die Verbindungsfläche aufgebracht werden, dadurch gekennzeichnet, daS die Harzkomponente eine begrenzte Verdünnbarkeit mit Wasser aufweist, und der Wert für die Verdünnbarkeit mit Wasser unter 3,0 Gewichtsteilen Wasser pro Gewichtsteil Harz liegt.

2. Verfahren nach Anspruch 1, dadurch gekennzeichnet, daS die Harzkomponente eine Verdünnbarkeit mit Wasser von 0,1 bis 2,0 Gewichtsteilen Wasser pro Gewichtsteil Harz aufweist.

3. Verfahren nach Anspruch 1 oder 2, dadurch gekennzeichnet, daß die Harzkomponente eine Verdünnbarkeit mit Wasser von 0,5 bis 1,5 Gewichtsteilen Wasser pro Gewichtsteil Harz aufweist.

4. Verfahren nach einem der vorstehenden Ansprüche, dadurch gekennzeichnet, daS es sich bei der Harzkomponente um ein Resorcin-Harz oder um ein Resorcin-Phenol-Harz handelt.

5. Verfahren nach einem der vorstehenden Ansprüche, dadurch gekennzeichnet, daß die Harzkomponenten und die Härterkomponente auf die Verbindungsfläche in Form von getrennten parallelen Strängen aufgebracht werden.

6. Harzkomponente, bestehend aus einem Resorcin-Harz oder einem Resorcin-Phenol-Harz, die zum Verkleben gemäß dem Verfahren von Beispiel 1 geeignet ist, dadurch gekennzeichnet, daß sie eine begrenzte Verdünnbarkeit mit Wasser aufweist und der Wert der Verdünnbarkeit mit Wasser unter 3,0 Gewichtsteilen Wasser pro Gewichtsteil Harz liegt.

7. Harzkomponente nach Anspruch 6, dadurch gekennzeichnet, daß sie eine Verdünnbarkeit mit Wasser von 0,1 bis 2,0 Gewichtsteilen Wasser pro Gewichtsteil Harz aufweist.